# EUROPEAN PATENT SPECIFICATION

(11) **EP 3 653 051 B1**
(45) Date of publication and mention of the grant of the patent: **14.08.2024**
(21) Application number: 19209813.5
(22) Date of filing: 18.11.2019
(51) Int. Cl.: A01M 7/00

(54) **APPARATUS FOR SPRINKLING FARMING PRODUCTS**
VORRICHTUNG ZUM BERIESELN VON LANDWIRTSCHAFTLICHEN PRODUKTEN
APPAREIL D'ASPERSION DE PRODUITS AGRICOLES

(30) Priority: 16.11.2018 IT 201800010413
(43) Date of publication of application: 20.05.2020
(73) Proprietor: Caffini S.p.A., 37050 Palu' (VR) (IT)
(72) Inventor: CAFFINI, Amedeo, 37050 Palu' (VR) (IT)
(74) Representative: Gallo, Luca

(56) References cited:
- CN-A- 105 994 230
- US-B2- 10 076 763

## Description

### Field of application

The present invention regards an apparatus for sprinkling farming products.

The present apparatus is inserted in the scope of the industrial field of production of farming machinery and/or of accessories for farming machinery and is advantageously intended to be mounted on carried, towed or self-propelled machinery.

In particular, the present sprinkling apparatus is intended to distribute liquid products over a farm terrain, in particular for spraying, fertilization or disinfestation of the cultivations.

### State of the art

As is known, sprinkling apparatuses for distributing farming products are diffused on the market, such as in particular farming machinery which is carried, towed or self-propelled, such as pulverizers, which are employed for distributing one or more liquid products (such as phytosanitary products, herbicides, anti-parasite products, fertilizers etc.) over the cultivations, i.e. over cultivated terrain. Such apparatuses are conventionally provided with at least one support frame provided with wheels for its movement on the ground and at least one sprinkling bar for distributing liquid products that is mechanically constrained, at one end thereof, to the support frame.

As is known, the sprinkling apparatus can be of carried type, i.e. fixed cantilevered to a tractor, or of towed type, in which the support frame is provided with anchorage means in order to be fixed to the tractor and is provided with wheels susceptible of being rotated by abutting against the ground, or of self-propelled type in which the support frame is provided with housed motor means which employ the wheels in order to drive them in rotation in an active and independent manner.

The sprinkling bar of the apparatus of known type is, during the distribution of the liquid products over the ground, arranged parallel to the ground and transverse with respect to the advancement direction of the apparatus. The sprinkling bar normally carries, mounted thereon, a plurality of dispensing nozzles directed towards the ground and hydraulically connected to a tank housed in the central body and containing the liquid product to be distributed. The apparatus of known type also provides for a pump mounted on the support frame, hydraulically connected to the tank and to the nozzles of the sprinkling bar.

In operation, the pump mounted on the support frame of the apparatus, and in particular of the farming machinery, suctions the liquid product from the tank and conveys it under pressure to the dispensing nozzles in order to sprinkle it on the cultivations during the advancement of the farming machinery.

More in detail, the sprinkling bar of the apparatus of known type comprises a central portion connected to the support frame and two lateral arms hinged, by means of corresponding connection pins, to the support frame. Along the lateral arms, the dispensing nozzles are mounted for distributing the liquid product over the ground.

In operation, the lateral arms of the sprinkling bar of the sprinkling apparatus of known type are movable between an open position, in which they are extended transversely to the advancement direction of the farming machinery in order to allow the nozzles to distribute the liquid product over the cultivated ground, and a closed position, in which the arms are folded along the sides of the farming machinery.

Each lateral arm normally has a rather high length (e.g. from 6 to 20 meters) for the purpose of distributing the liquid product over a wide ground surface area during the advancement of the farming machinery.

Several sprinkling bars of known type are described, for example, in the patents US 5,375,767 and EP 0572091.

The main drawback of these solutions of known type is tied to the fact that, due to the large dimensions of the lateral arms of the sprinkling bar, when the farming machinery accelerates or decelerates during the sprinkling operations, the lateral arms of the bar exert strong stresses on the support frame due to the inertia of the arms themselves.

More in detail, when the farming machinery accelerates, for example in starting phase, the inertia of the sprinkling bar arms tends to maintain the latter back, making them rotate around the respective connection pins towards the back of the farming machinery. Analogously, when the farming machinery decelerates, for example in stopping step, the force of inertia of the arms pushes them forward, making them rotate in the opposite direction.

Since the lateral arms have high length and weight, these generate inertia moments of strong intensity, exerting strong stresses that are discharged on the support frame of the sprinkling apparatus.

In order to resist such stresses, it is necessary that the arms of the sprinkling bar be made with strong, heavy and therefore costly materials.

In the same manner, in order to support such arms of the sprinkling bar, the support frame of the apparatus must be made with stronger and costlier materials, increasing the overall cost for making the apparatus of known type. In addition, such stronger materials considerably increase the weight of the sprinkling apparatus. A greater weight of the sprinkling apparatus translates into a greater compaction of the cultivated ground upon passage of the sprinkling apparatus itself, decreasing the productive yield of the cultivation.

In order to distribute the liquid products over the ground in a uniform and optimal manner, the nozzles of the sprinkling bar must all be aligned along a direction substantially parallel to the ground itself and placed at a height which remains substantially constant during the entire sprinkling.

A further drawback of the sprinkling apparatuses of known type lies in the fact that the arms of the sprinkling bar of known type, which are mechanically constrained to the support frame, are moved following the oscillations of the support frame itself, varying their height with respect to the ground and therefore negatively affecting the outcome of the distribution of the liquid products over the ground.

In order to at least partially remedy the aforesaid drawbacks of the above-indicated sprinkling apparatuses of known type, apparatuses have been ideated that are provided with sprinkling bars comprising balancer means which are mechanically and/or hydraulically actuated, adapted to damp the oscillations imparted to the bar by the movements of the support frame during the advancement on the ground to be treated. The balancer means normally comprise a hydraulic circuit which drives actuators placed at one end of the sprinkling bar fixed to the support frame. The actuators act on the bar in order to impart a movement thereof on the basis of a feedback sent by sensors, e.g. ultrasound sensors, placed on the sprinkling bar itself. Such sensors are adapted to detect the elevation of the sprinkling bar with respect to the ground, so as to maintain it substantially constant.

Also the latter sprinkling apparatus of known type has in practice shown that it does not lack drawbacks.

The main drawback lies in the fact that the balancer means require a non-negligible time before adjusting the positioning of the sprinkling bar with respect to the ground, negatively affecting the effectiveness of the treatment.

In order to at least partially overcome the drawbacks of the sprinkling apparatuses of known type, sprinkling apparatuses have been ideated in which the support frame is constituted by an unmanned aerial vehicle, normally known with the acronym UAV or with the commercial name "drone".

The drone is provided with at least one rotary propeller ("rotor" in the technical jargon of the field) around a vertical axis in order to maintain the support frame suspended. Such propeller is rotated by a corresponding electric motor power supplied by at least one battery, both mounted on the support frame.

The following are then fixed to the support frame: the arms of the sprinkling bar, a small-size tank and a pump placed as a hydraulic connection with the tank and with the nozzles of the sprinkling bar.

In this manner, the sprinkling apparatus is not subjected to the oscillations due to its movement on the ground, maintaining a substantially constant height of the nozzles of the sprinkling bar.

Nevertheless, also the latter sprinkling apparatus of known type has in practice shown that it does not lack drawbacks.

The main drawback lies in the fact that the drones have a reduced load capacity that prevents the use of large-size tanks and of high-length arms of the sprinkling bars, requiring a frequent resupply of the tank and a greater stay time of the apparatus on the ground to be treated so as to distribute the product over the entire surface. Such frequent resupplying greatly increases the time necessary for completing the operation of distributing the liquid products over the ground.

A further drawback lies in the fact that the batteries mounted on the drone which power supply the electric motors that rotate the propellers have limited autonomy. Indeed, in order to increase the autonomy of the batteries, it would be necessary to increase the volume and the weight thereof, hence they cannot be transportable by the drone itself.

Therefore, the apparatus of known type provided with drone can be used for a limited time period, in order to then require the recharging of the batteries.

In order to at least partially overcome the drawbacks of the latter sprinkling apparatuses of known type, and in particular the drawback of the limited duration of the batteries, sprinkling apparatuses have been ideated that are provided with a drone whose rotor is moved by means of at least one internal combustion engine, for example a gasoline motor. The drone carries, mounted thereon, a tank filled with fuel material and placed in fluid connection with the internal combustion engine in order to power supply it. In this manner, the drone allows an operation with greater autonomy and a greater power with respect to those moved by means of an electric motor power supplied by a battery, and it also allows a much lower stopping time, in which it is sufficient to reload the tank with a new fuel material, e.g. gasoline.

Nevertheless, also the latter type of sprinkling apparatus of known type has in practice shown that it does not lack drawbacks.

The main drawback lies in the fact that the tank containing the fuel must have small size, in order to not overload the drone. In this situation, the drone requires cyclical pauses in order to allow a reloading of the tank, therefore the times necessary for completing the sprinkling of the farming product remain long.

A further drawback of the latter type of sprinkling apparatuses of known type lies in the fact that part of the load capacity of the drone is lost due to the need to transport also the fuel material, decreasing the capacity of farming product which the drone is capable of transporting over the ground to be treated.

Documents US 10,076,763 and CN 105994230 disclose further sprinkling apparatuses of known type, which comprise a central support unit drivable to advance on the ground, and one or two sprinkling bars, each of which is made by more sections connected to each other and to the support unit by means of mechanical joints. Further, each sprinkling bar is supported by means of a plurality of drones.

### Presentation of the invention

Main object of the present invention is therefore that of overcoming the drawbacks manifested by the solutions of known type, by providing an apparatus for sprinkling farming products provided with a sprinkling bar which remains at a constant elevation with respect to the ground to be treated and which is able to not perceive the stresses transmitted by the support frame of the same sprinkling apparatus.

Another object of the present invention is to provide an apparatus for sprinkling farming products which is provided with a support frame and with a sprinkling bar made of light and inexpensive materials.

Another object of the present invention is to provide a sprinkling apparatus for distributing farming products which has a high autonomy and which can therefore be used for a long time period without having to reload the tank and/or recharge the batteries.

A further object of the present invention is to provide a sprinkling apparatus for distributing farming products which is simple to use.

A further object of the present invention is to provide a sprinkling apparatus for distributing farming products which is entirely reliable even for long time periods.

A further object of the present invention is to provide a sprinkling apparatus for distributing farming products which allows reducing, to a minimum, the compaction of the ground in order to maximize the production efficiency of cultivations of the ground itself.

### Brief description of the drawings

The technical characteristics of the invention, according to the aforesaid objects, can be clearly seen in the below-reported claims and the advantages thereof will be more evident from the following detailed description, made with reference to the enclosed drawings, which represent a merely exemplifying and non-limiting embodiment of the invention in which:
- figure 1 shows an axonometric overall view of the sprinkling apparatus for distributing farming products, object of the present invention, in a work configuration thereof;

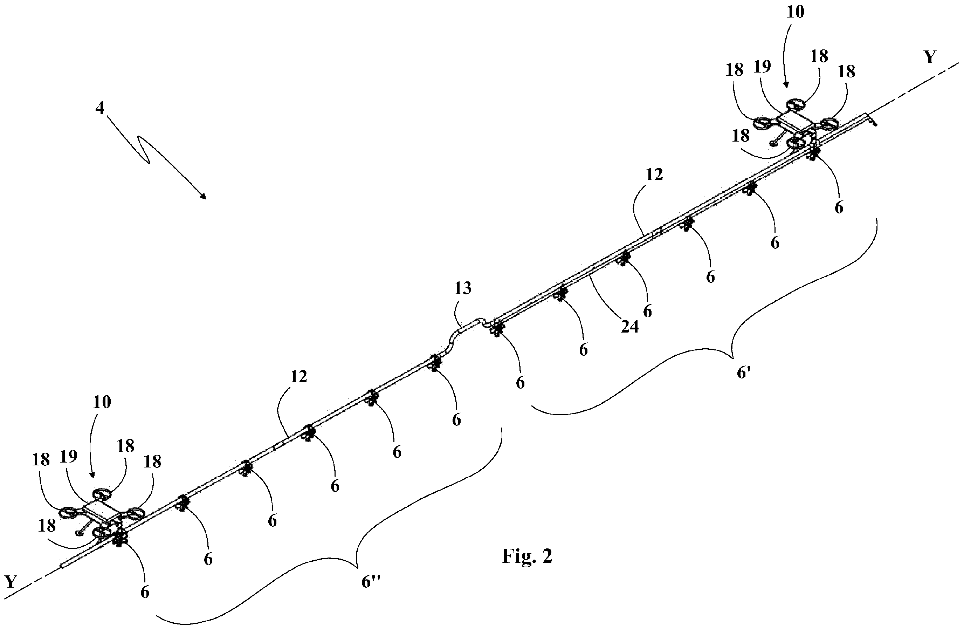

- figure 2 shows an axonometric view of a detail of the sprinkling apparatus, relative to a sprinkling bar supported by drones;
- figure 3 shows an axonometric view of a detail of the sprinkling bar illustrated in figure 2 relative to lifting means adapted to support the bar itself;

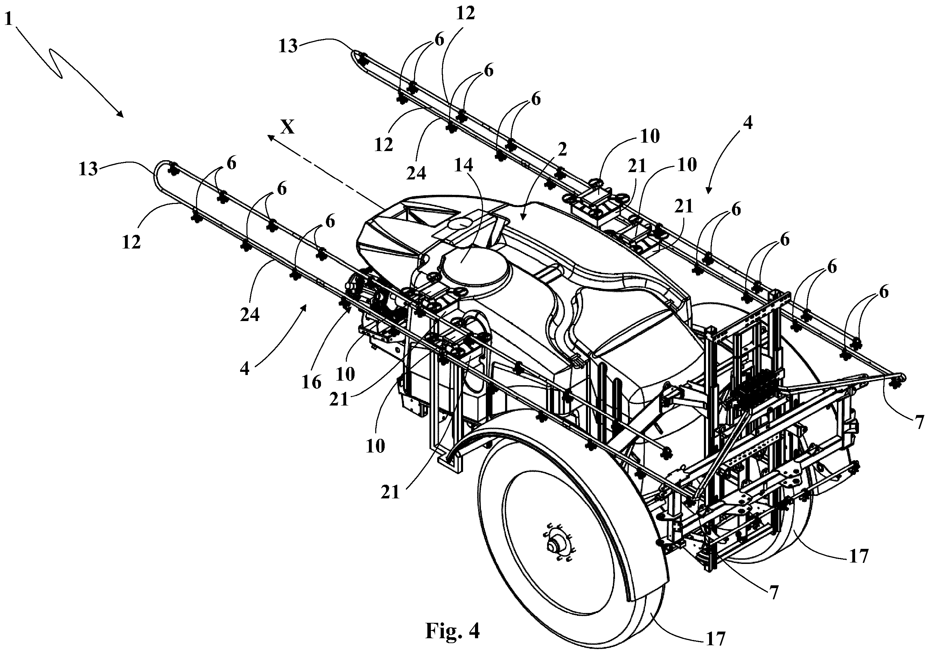

- figure 4 shows an axonometric view of the sprinkling apparatus, object of the present invention, in a rest configuration thereof;

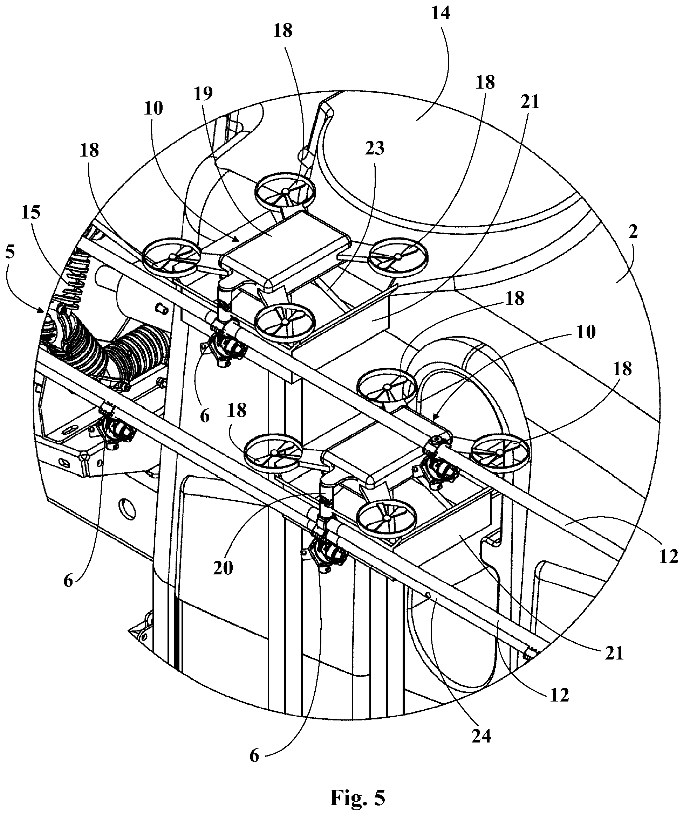

- figure 5 shows an axonometric view of a detail of the sprinkling apparatus illustrated in figure 4 relative to means for lifting the sprinkling bar in the rest configuration;

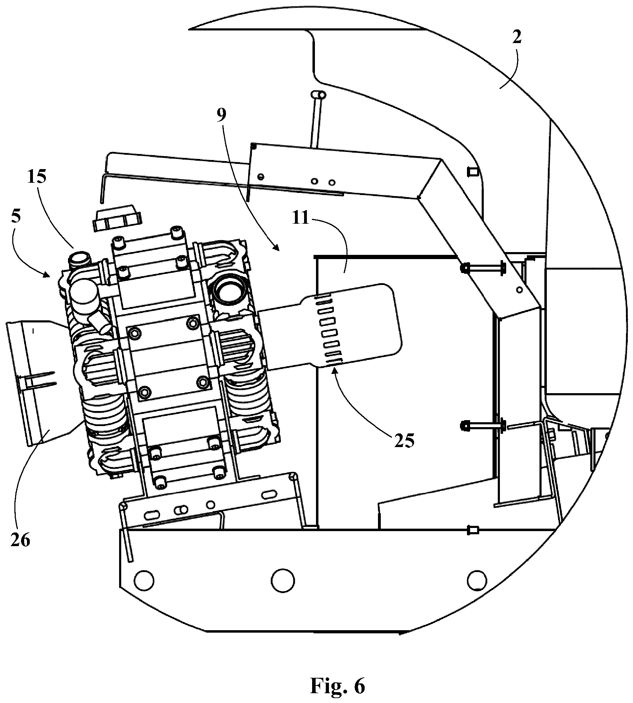

- figure 6 shows a view of a detail of the sprinkling apparatus illustrated in figures 1 and 4 relative to electrical power supply means.

### Detailed description of a preferred embodiment

With reference to the enclosed drawings, reference number 1 overall indicates the sprinkling apparatus for distributing farming products, object of the present invention.

Such sprinkling apparatus 1 has been illustrated in the enclosed figures in a preferred embodiment thereof as a pulverizer for distributing liquid products over cultivations; such pulverizer is intended to be towed by a tractor in order to advance on the ground along an advancement direction X.

The sprinkling apparatus 1 is adapted to be advantageously employed for distributing liquid products over farming cultivations during the operations of spraying, fertilization, disinfestation, etc. of the cultivations. The liquid products used are usually obtained with aqueous solutions containing chemical products (e.g. phytodrugs) diluted in concentrations which vary depending on the type of cultivation to the treated.

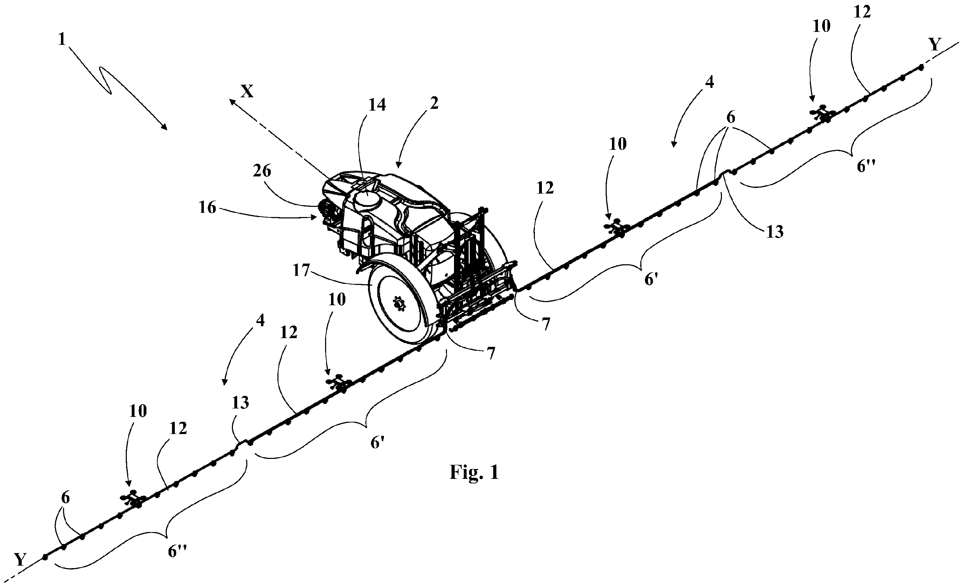

With particular reference to the enclosed figure 1, the sprinkling apparatus 1 is provided with anchorage means 16 for its connection to a tractor, not illustrated in the enclosed figures and per se well-known to the man skilled in the art. Preferably, the anchorage means 16 comprise a universal joint 26 mechanically connected to a drive shaft (not illustrated) of the tractor in order to bring the rotation motion imparted by the tractor itself to the sprinkling apparatus 1, advantageously so as to activate means for feeding the products 5 and/or electrical power supply means 9, both described in detail hereinbelow.

In accordance with a different embodiment not illustrated in the enclosed figures, the sprinkling apparatus 1, object of the present invention, can be made as a self-propelled vehicle, provided with motor means, such as an endothermic engine, without requiring the aid of a tractor for its movement on the ground to be treated.

Otherwise, the sprinkling apparatus 1 can be of carried type, i.e. fixed cantilevered on the tractor and supported during its entire use by the tractor itself. In accordance with the particular embodiment illustrated in the enclosed figures, the sprinkling apparatus 1 comprises a support frame 2 on which two wheels 17 are preferably mounted for advancing on the ground.

For description simplicity, hereinbelow it will be considered that the ground has a horizontal positioning. Of course, the sprinkling apparatus 1 is easily usable on any type of ground, hence in particular even on tilted, irregular and particularly unstable terrain.

The sprinkling apparatus 1 is susceptible of advancing on the ground and comprises at least one sprinkling bar 4 provided with a plurality of distribution nozzles 6.

Advantageously, the sprinkling bar 4 is intended to distribute, on the surface of the terrain, the farming products which are expelled through the dispensing nozzles 6, preferably directed towards the ground.

Such sprinkling bar 4 is operatively associated with the support frame 2 and is movable between an extended position, in which it projects laterally with respect to the support frame 2 and a retracted position, in which it is placed in proximity to the support frame 2.

More in detail, the sprinkling bar 4 of the apparatus 1 in extended position projects substantially transversely with respect to the advancement direction of the apparatus 1 and in retracted position it is substantially side-by-side the support frame 2.

Advantageously, the sprinkling bar 4 of the sprinkling apparatus 1 is configured for being arranged at a different elevation based on the different cultivation and/or type of terrain to be treated.

Advantageously, the sprinkling bar 4 comprises at least two connected arms 12. In accordance with a first embodiment, the arms 12 are connected by means of a flexible connector 13.

In accordance with the preferred embodiment illustrated in the enclosed figures, at least one of the two arms 12 carries, mounted thereon, a tube 24 (described in detail hereinbelow) connected to the other arm 12, in particular by means of the flexible connector 13.

Advantageously, the arms 12 of the sprinkling bar 4 are only connected by means of the aforesaid flexible connector 13, in particular without providing for any mechanical hinging connector.

In this manner, the apparatus 1, object of the present invention, is structurally simple and reliable.

In addition, the sprinkling bar 4 of the apparatus 1, object of the present invention, is light and easily movable between the extended position and the retracted position.

In accordance with the preferred embodiment illustrated in the enclosed figures, the sprinkling apparatus 1 comprises two sprinkling bars 4 which, in extended position, are extended starting from two opposite sides of said support frame 2, with respect to the advancement direction X.

More in detail, with particular reference to the enclosed figure 1, the two sprinkling bars 4 in extended position are aligned along a transverse direction Y, substantially orthogonal to the advancement direction X of the support frame 2 of the sprinkling apparatus 1.

The sprinkling apparatus 1 also comprises means for feeding farming products 5 associated with the support frame 2 and placed in hydraulic connection with the plurality of nozzles 6 of the sprinkling bar 4.

Advantageously, the means for feeding products 5 comprise at least one tank 14 mounted on the support frame 2, intended to contain at least one liquid product to be distributed and connected to the plurality of nozzles 6 of the sprinkling bar 4 by means of at least one flexible tube 7.

The means for feeding products 5 also comprise preferably a pump 15 mounted on the support frame 2 of the sprinkling apparatus 1, in particular placed to intercept the product between the tank 14 and the sprinkling bar 4, in order to suction the liquid product contained in the tank 14 and push it under pressure to the dispensing nozzles 6 and distribute it over the ground.

In accordance with the preferred embodiment illustrated in the enclosed figures, the pump 15 is of the type with membrane.

Of course, the pump 15 can be of any type per se known to the man skilled in the art of the field, without departing from the protective scope of the present patent. In accordance with a first embodiment of the means for feeding products 5, the tank 14 is intended to comprise all the farming products for the sprinkling over the ground thereof by means of the plurality of nozzles 6 of the sprinkling bar 4. Otherwise, in accordance with a further embodiment, the means for feeding products 5 provide that the tank 14 is intended to contain a farming product, for example water, and are also provided with an injection device (not illustrated in the enclosed figures) placed downstream of the pump 15 and configured for injecting, advantageously within the arms 12 and the tube 24, a concentrated farming product, such as a pesticide product or a fertilizing product.

In accordance with a first embodiment not illustrated in the enclosed figures, the arms 12 and the connector 13 are internally hollow, placed in hydraulic connection with the means for feeding products 5 and advantageously with the plurality of dispensing nozzles 6. The arms 12 are advantageously susceptible of being crossed by at least one first flow of farming product in order to feed the plurality of nozzles 6.

Preferably, the flexible connector 13 comprises at least one tube made of flexible material, in particular plastic, such as a polymer material or a rubber.

Advantageously, each arm 12 of the sprinkling bar 4 is extended between a first end and an opposite second end respectively provided with a first opening and an opposite second opening. The flexible connector 13 is advantageously placed as a fluid-dynamic connection between the second opening of the second end of one of the aforesaid arms 12 and the first opening of the first end of the other of the aforesaid arms 12.

Preferably, the arms 12 of the sprinkling bar 4 are contiguous with each other, with the second end of one of the arms 12 (in particular the proximal arm) adjacent to the first end of the other of the arms 12 (in particular the distal arm). Advantageously, when the sprinkling bar 4 is in the extended position, the arms 12 are arranged aligned with each other along the transverse direction Y, in which the second end of the proximal arm 12 is placed substantially in front of the first end of the distal arm.

More in detail, with the sprinkling bar 4 in the extended position, the first end of the proximal arm is adjacent to the support frame 2 and the second end of such proximal arm is moved away from the support frame 2. Suitably, with the sprinkling bar 4 in the extended position, the distal arm is placed with its first end adjacent to and aligned with the second end of the proximal arm and with its second end moved away from the proximal arm.

Preferably, with the sprinkling bar 4 in the retracted position, the arms 12 are arranged side-by-side the support frame 2 with both ends (first and second) substantially adjacent to the support frame 2 itself.

In addition, the means for feeding products 5 advantageously comprise the aforesaid tube 24, in particular mechanically constrained to a first of the rigid arms 12 of the sprinkling bar 4, susceptible of being crossed at least by a second flow of liquid products for farming to be distributed over the ground.

The tube 24 is in fluid connection with a first portion 6' of the plurality of dispensing nozzles 6, in order to allow the distribution of the liquid products over the ground. The first portion 6' of the plurality of dispensing nozzles 6 is advantageously provided at a first of the two arms 12 and in particular at the arm 12 close to the support frame 2, with the sprinkling bar 4 in extended position. Advantageously, the arms 12 are in fluid connection with a second portion 6" of the plurality of dispensing nozzles 6. The second portion 6" of the nozzles 6 is advantageously provided at a second of the two arms 12 and in particular at the distal arm 12 with respect to the support frame 2, with the sprinkling bar 4 in extended position.

The arms 12 and the tube 24 are preferably fed simultaneously by the means for feeding products 5 in order to simultaneously feed the first portion 6' and the second portion 6" of the plurality of dispensing nozzles 6.

Otherwise, in accordance with a further embodiment not illustrated in the enclosed figures, the entire plurality of dispensing nozzles 6 is fed by the hollow arms 12. In this situation, the means for feeding products 5 comprise at least one flow regulation device, such as at least one solenoid valve, configured for allowing the feeding of all the nozzles 6 with the same flow of farming products. In this situation, each arm 12 is preferably provided with different cross section with respect to the section of the other arms 12, so as to maintain constant pressure of the product that flows at its interior over all the nozzles 6.

In accordance with the preferred embodiment illustrated in the enclosed figures, the first and second portion 6', 6" of the plurality of nozzles 6 is fixed and fed by a corresponding arm 12 of the two arms 12.

More in detail, the arm 12 close to the support frame 2 carries, mounted thereon, the tube 24, which is placed in fluid connection with the means for feeding products 5, in particular by means of the flexible tube 7, and with the arm 12 distal from the support frame 2, in particular by means of the flexible connector 13.

The arm 12 close to the support frame 2 and the tube 24 are both fed in parallel, so as to simultaneously feed both the first portion 6', with the rigid arm 12 close to the support frame 2, and the second portion 6" of the plurality of nozzles 6, with the rigid arm 12 distal from the support frame 2.

In this manner, the tube 24 acts as a bridge, in order to bring the farming product from the means for feeding products 5 to the arm 12 distal from the support frame 2.

Of course, in accordance with the latter preferred embodiment, the apparatus 1 can comprise more than two arms 12, each of which advantageously supported by a drone 10 and adapted to feed a corresponding portion of nozzles of the plurality of nozzles 6.

According to the idea underlying the present invention, the sprinkling apparatus 1 also comprises at least one drone 10 mechanically constrained to the sprinkling bar 4 in order to aerially support it.

More in detail, the drone 10, also known with the technical name 'unmanned aerial vehicle' or with its acronym UAV, is a device provided with at least one rotor fitted on the shaft of a motor and adapted to lift the drone 10 itself in flight. Preferably and in accordance with the preferred embodiment illustrated in the enclosed figures, the motor of the drone 10 is of electric type, but of course the at least one motor of the at least one drone 10 can be of any type well-known to the man skilled in the art, such as for example an endothermic engine hydraulically connected to a fuel tank.

With particular reference to the preferred embodiment illustrated in the enclosed figures, the drone 10 of the sprinkling apparatus 1 is a quadrotor, i.e. a drone provided with four rotors, each fitted on a different electric motor in order to lift the drone 10 in flight, and hence lift the sprinkling bar 4 in flight, in a stable manner.

In this manner, the sprinkling apparatus 1, object of the present invention, is capable of maintaining the sprinkling bar 4 at a constant elevation with respect to the ground to be treated, since such bar 4 is maintained suspended from the drone 10. The plurality of dispensing nozzles 6 therefore remains at the optimal elevation for performing the sprinkling of the liquid products.

The sprinkling bar 4 is advantageously connected to the support frame 2 by means of the aforesaid flexible tube 7.

In this manner, the sprinkling bar 4 is mechanically not constrained with the movements of the support frame 2 and therefore does not undergo elevation variations or oscillations due to the advancement of the support frame 2 on the ground to be treated, which can also be quite rough.

In operation, the drone 10 is susceptible of being lifted from the ground in suspension, pushed by the action of the at least one rotor 18, and remain at an elevation that is substantially constant during the advancing of the support frame 2.

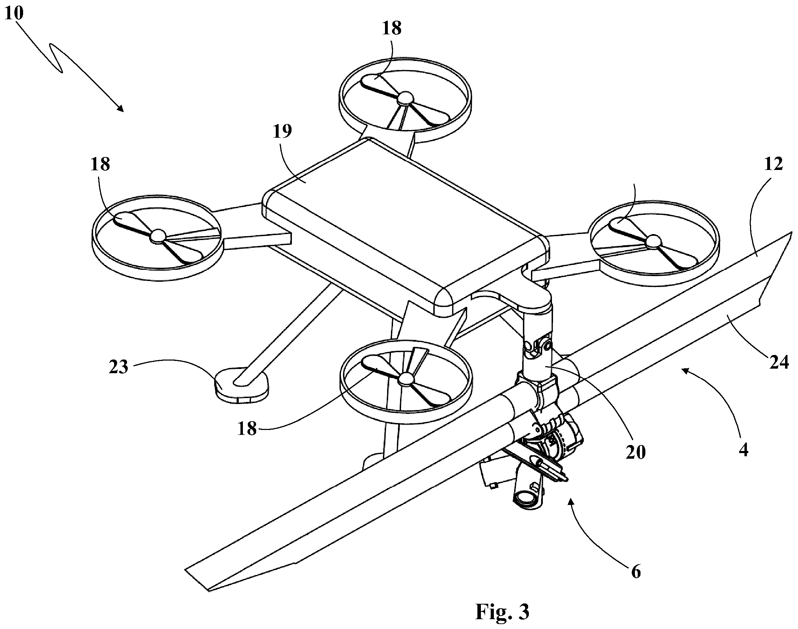

More in detail, with particular reference to the enclosed figure 3, the drone 10 of the sprinkling apparatus 1, object of the present invention, preferably comprises a box-like body 19 mechanically fixed to the sprinkling bar 4, in particular by means of an articulation 20, and carries, mounted thereon, the at least one rotor 18, and in particular it carries four rotors 18 mounted thereon.

The articulation 20 connects the box-like body 19 to the sprinkling bar 4, arranged for allowing a relative rotational movement of the drone 10 with respect to the sprinkling bar 4, in particular during the movement between the extended position and the retracted position of the sprinkling bar 4 itself.

In operation, during the movement between the extended position and the retracted position of the sprinkling bar 4, and during acceleration and braking, the at least one drone 10 it tilted with respect to the ground and therefore requires further degrees of freedom with respect to the sprinkling bar 4, ensured by the aforesaid articulation 20.

Advantageously, the box-like body 19 of the drone 10 at its interior defines a housing volume in which an electronic control unit is housed, electrically connected to the at least one electric motor (not illustrated in the enclosed figures and per se known to the man skilled in the art) and adapted to drive the rotation speed of the electric motor itself, which is adapted to rotate the at least one rotor 18.

In addition, the electronic control unit is adapted to drive the drones during the movement of the sprinkling bar between the retracted position and the extended position.

In accordance with the preferred embodiment illustrated in the enclosed figures, each motor of the quadrotor illustrated in the enclosed figures is housed centrally with respect to the corresponding rotor 18, in order to rotate it, and is electrically connected to the electronic control unit.

The electronic control unit (not illustrated in the enclosed figures and per se well-known to the man skilled in the art) of the at least one drone 10 is placed in data connection with a positioning device provided on the support frame 2 of the sprinkling apparatus 1.

The electronic control unit is susceptible of controlling the relative position of the drone 10 with respect to the support frame 2, so as to maintain the drone 10 itself at a predetermined distance and hence maintain the sprinkling bar 4 in the extended position at a constant distance with respect to the support frame 2 during the entire sprinkling of the liquid products over the ground.

Advantageously, the apparatus 1 comprises a drive unit operatively connected to the electronic control unit of the drones 10 and programmed for driving the drones 10 themselves to move the arms 12 of the sprinkling bar 4 between the retracted position and the extended position.

More in detail, the drive unit comprises a control unit mechanically mounted on the support frame 2 and electrically connected to each electronic control unit of each drone 10.

The drive unit advantageously comprises at least one memory in which a command program (software/firmware) is installed, containing at least the instructions for driving the movement of the drones 10 in a coordinated manner with respect to each other, in order to move the sprinkling bar 4 between the retracted position and the extended position.

In particular, the instructions of the command program of the drive unit define at least one pre-established spatial configuration of the drones 10 in order to maintain the sprinkling bar 4 in the extended position (in particular with the arms 12 aligned with each other).

Suitably, in order to bring the sprinkling bar 4 back into the retracted position, the instructions of the command program allow bringing the drones 10 back onto the support frame 2 (in particular onto the support bases 21).

In accordance with the preferred embodiment illustrated in the enclosed figures, the sprinkling apparatus 1 comprises four drones 10, each mechanically constrained to one of the two arms 12 of the two sprinkling bars 4, each mechanically associated with an opposite side of the central frame 2, with respect to the movement direction X.

Preferably, each of the four drones 10 is mechanically constrained to one of the arms 12 of the two sprinkling bars 4 in a substantially middle position, so as to balance the weight that drones 10 must sustain.

In this manner, each arm 12 of each sprinkling bar 4 is maintained suspended from only one drone 10, decreasing the complexity for attaining a control of the drones 10 themselves, which will be described in detail hereinbelow.

Otherwise, in accordance with a further embodiment not illustrated in the enclosed figures, the sprinkling apparatus 1 comprises two or more drones 10 for each arm 12 of each sprinkling bar 4.

Advantageously, the elevation with respect to the ground of the drones 10 can be varied by an operator, who drives, for example by means of an electronic input device, the electronic control unit. Normally, the elevation of the drones 10 is variable based on the type of cultivation and terrain to be treated.

Advantageously, the support frame 2 comprises at least one support base 21 adapted to support the drone 10 with the sprinkling bar 4 in retracted position.

More in detail, the at least one drone 10 comprises at least one abutment foot 23 mechanically constrained to the box-like body 19 and, during use, such foot projects below the box-like body 19 itself.

The abutment foot 23 of the drone 10 is intended to abut against the support base 21 of the support frame 2 with the sprinkling bar 4 in retracted position.

In accordance with the preferred embodiment illustrated in the enclosed figures, the at least one drone 10 is preferably provided with four abutment feet 23.

Advantageously, the sprinkling apparatus 1 comprises electrical power supply means 9 associated with the support frame 2 placed in electromagnetic connection with the drone 10 in order to power supply it, and in particular they are connected to the electronic control unit housed in the box-like body 19 of the drone 10, and to the at least one motor, and in particular they are preferably connected to the four motors arranged coaxially with the four rotors 18 provided in the preferred embodiment.

More in detail, the electrical power supply means 9 comprise at least one battery 11 mounted on the support frame 2 in electromagnetic connection with the at least one drone 10.

Preferably, the electrical power supply means 9 comprise a generator 25 mounted on the support frame 2 and electrically connected to the battery 11 in order to recharge it.

More in detail, the generator 25 is an alternator mechanically associated with an endothermic engine (not illustrated in the enclosed figures), in particular an internal combustion engine, and such internal combustion engine can be mounted on the support frame 2 of the apparatus 1, in the case of self-propelled farming machinery, or otherwise it can be provided on the tractor, in the case of towed farming machinery.

In this manner, the endothermic engine drives the alternator in rotation, which generates an electric power adapted to maintain the battery 11 charged.

In addition, between the generator 25 and the battery 11, an electronic power unit and in particular a rectifier is interposed, adapted to convert the alternating voltage generated by the generator 25 into a direct voltage, adapted to recharge the battery 11.

Preferably, in accordance with the preferred embodiment illustrated in the enclosed figures, the electrical power supply means 9 comprise a pack of batteries 11 mounted on the support frame 2, electrically connected to the four drones 10 in order to electrically power supply the electric motors of the four rotors 18.

In this manner, the battery 11 mounted on the support frame 2 is centralized with respect to the drones 10, which do not require recharging as long as the generator 25 maintains the battery 11 charged.

Advantageously, the electrical power supply means 9 also comprise at least one electrical cable placed as an electrical connection with the battery 11 and the box-like body 19 of the at least one drone 10, so as to drive an electrical power supply to the electric motor which rotates the at least one rotor 18 of the drone 10 itself.

Otherwise, in accordance with a further embodiment of the invention not illustrated in the enclosed figures, the electrical power supply means 9 comprise a wireless charging device mounted on the support frame 2 and at least one reception device mounted on the at least one drone 10.

More in detail, the wireless charging device is adapted to send electromagnetic waves to the reception device of the drone 10, in order to power supply the at least one electric motor by means of wireless charging, in a manner per se known to the man skilled in the art and therefore not described in detail hereinbelow, such as laser charging.

The invention thus described therefore attains the pre-established objects.

In particular, the sprinkling apparatus 1, object of the present invention, is provided with at least one sprinkling bar 4 capable remaining at a substantially constant elevation with respect to the ground to be treated, without perceiving the stresses transmitted by the support frame 2 of the same sprinkling apparatus 1. Indeed, the sprinkling bar 4 is maintained suspended from at least one drone 10, which is operatively connected to the support frame 2.

## Claims

1. Sprinkling apparatus (1) for distributing farming products, susceptible of advancing on the ground, which comprises:
- at least one support frame (2);
- at least one sprinkling bar (4) provided with a plurality of dispensing distribution nozzles (6), operatively associated with said support frame (2) and movable between an extended position, in which it projects laterally with respect to said support frame (2) and a retracted position, in which it is placed in proximity to said support frame (2), said sprinkling bar (4) comprising at least two arms (12) connected to each other;
- means for feeding farming products (5) associated with said support frame (2) and placed in hydraulic connection with said plurality of nozzles (6);
- at least two drones (10) mechanically constrained to said sprinkling bar (4) in order to aerially support it, each drone (10) being mechanically constrained to a corresponding said arm (12) of said sprinkling bar (4);
said sprinkling apparatus (1) being **characterized in that** the at least two arms (12) of said sprinkling bar (4) being connected by means of a flexible connector (13);
wherein the arms (12) of said at least one sprinkling bar (4) and the flexible connector (13) are internally hollow, placed in hydraulic connection with said means for feeding products (5) and with said plurality of dispensing nozzles (6); said arms (12) being susceptible of being crossed by at least one first flow of farming product in order to feed said plurality of nozzles (6).

2. Sprinkling apparatus (1) according to claim 1, **characterized in that** it comprises electrical power supply means (9) associated with said support frame (2) placed in electromagnetic connection with said drone (10) in order to power supply it.

3. Sprinkling apparatus (1) according to claim 2, **characterized in that** said electrical power supply means (9) comprise at least one battery (11) mounted on said support frame (2) in electromagnetic connection with said at least one drone (10).

4. Sprinkling apparatus (1) according to claim 3, **characterized in that** said electrical power supply means (9) comprise at least one generator (25) electrically connected to said battery (11) in order to electrically charge it.

5. Sprinkling apparatus (1) according to any one of the preceding claims, **characterized in that** each arm (12) of said sprinkling bar (4) is extended between a first end and an opposite second end respectively provided with a first opening and with a second opening;
said flexible connector (13) being placed as a fluid-dynamic connection between the second opening of the second end of one of said arms (12) and the first opening of the first end of the other of said arms (12).

6. Sprinkling apparatus (1) according to one of the preceding claims, **characterized in that** it comprises at least one articulation (20) placed to connect between said at least one drone (10) and said sprinkling bar (4), arranged for allowing a relative rotational movement of said drone (10) with respect to said sprinkling bar (4).

7. Sprinkling apparatus (1) according to any one of the preceding claims, **characterized in that** it comprises two sprinkling arms (4) which, in extended position, are extended starting from two opposite sides of said support frame.

8. Sprinkling apparatus (1) according to one of the preceding claims, **characterized in that** said product feeding means (5) comprise at least one tank (14) mounted on said support frame (2), intended to contain at least one product to be distributed and connected to said plurality of nozzles (6) of said sprinkling bar (4) by means of at least one flexible tube (7).

9. Sprinkling apparatus (1) according to any one of the preceding claims, **characterized in that** said support frame (2) comprises at least one support base (21) adapted to support said drone (10) with said sprinkling bar (4) in retracted position.

10. Sprinkling apparatus (1) according to any one of the preceding claims, **characterized in that** said drone (10) comprises an electronic control unit susceptible of controlling the relative position of said drone (10) with respect to said support frame (2), in order to maintain said drone (10) at a predetermined distance and to maintain said sprinkling bar (4) in the extended position at a substantially constant distance with respect to said support frame (2) during the sprinkling of the liquid products over the ground.

11. Sprinkling apparatus (1) according to claim 10, **characterized in that** it comprises a drive unit operatively connected to the electronic control units of said drones (10) and programmed for driving said drones (10) to move the arms (12) of said sprinkling bar (4) between the retracted position and the extended position.

## Patentansprüche

1. Vorrichtung zum Berieseln (1) zur Verteilung von landwirtschaftlichen Produkten, die geeignet ist, sich auf dem Boden fortzubewegen, die Folgendes umfasst:
- mindestens einen Tragrahmen (2);
- mindestens eine Berieselungsleiste (4), die mit einer Vielzahl von Verteilerdüsen (6) ausgestattet, operativ mit dem genannten Tragrahmen (2) verbunden und zwischen einer ausgefahrenen Position, in der sie seitlich von dem genannten Tragrahmen (2) vorsteht, und einer eingefahrenen Position, in der sie in der Nähe des genannten Tragrahmens (2) positioniert ist, beweglich ist, wobei die genannte Berieselungsleiste (4) mindestens zwei miteinander verbundene Ausleger (12) umfasst;
- Elemente zur Verteilung von landwirtschaftlichen Produkten (5), die mit dem genannten Tragrahmen (2) verbunden und an die genannte Vielzahl von Verteilerdüsen (6) hydraulisch angeschlossen sind;
- mindestens zwei Drohnen (10), die mechanisch mit der genannten Berieselungsleiste (4) verbunden sind, um sie in der Luft zu unterstützen, wobei jede Drohne (10) mechanisch mit einem entsprechenden Ausleger (12) der genannten Berieselungsleiste (4) verbunden ist;
wobei die genannte Vorrichtung zum Berieseln (1) **dadurch gekennzeichnet ist, dass** die mindestens zwei Ausleger (12) der genannten Berieselungsleiste (4) mittels eines flexiblen Verbindungsstücks (13) verbunden sind;
wobei die Ausleger (12) der genannten mindestens einen Berieselungsleiste (4) und das flexible Verbindungsstück (13) innen hohl sind und an die genannten Elemente zur Verteilung von Produkten (5) und die genannte Vielzahl von Verteilerdüsen (6) hydraulisch angeschlossen sind; wobei die genannten Ausleger (12) geeignet sind, von mindestens einem ersten Durchfluss eines landwirtschaftlichen Produkts überquert zu werden, um die genannte Vielzahl von Verteilerdüsen (6) zu versorgen.

2. Vorrichtung zum Berieseln (1) nach Anspruch 1, **dadurch gekennzeichnet, dass** sie mit dem genannten Tragrahmen (2) verbundene Elemente zur elektrischen Versorgung (9) umfasst, die elektromagnetisch mit der genannten Drohne (10) verbunden sind, um sie zu versorgen.

3. Vorrichtung zum Berieseln (1) nach Anspruch 2, **dadurch gekennzeichnet, dass** die genannten Elemente zur elektrischen Versorgung (9) mindestens eine auf dem genannten Tragrahmen (2) montierte Batterie (11) umfassen, die elektromagnetisch mit der genannten mindestens einen Drohne (10) verbunden ist.

4. Vorrichtung zum Berieseln (1) nach Anspruch 3, **dadurch gekennzeichnet, dass** die genannten Elemente zur elektrischen Versorgung (9) mindestens einen elektrisch an die genannte Batterie (11) angeschlossenen Generator (25) umfassen, um sie elektrisch zu laden.

5. Vorrichtung zum Berieseln (1) nach einem beliebigen der vorangegangenen Ansprüche, **dadurch gekennzeichnet, dass** jeder Ausleger (12) der genannten Berieselungsleiste (4) zwischen einem ersten Ende und einem gegenüberliegenden zweiten Ende verläuft, die jeweils mit einer ersten Öffnung und mit einer zweiten Öffnung versehen sind;
wobei das genannte flexible Verbindungsstück (13) als strömungsdynamische Verbindung zwischen der zweiten Öffnung des zweiten Endes eines der genannten Ausleger (12) und der ersten Öffnung des ersten Endes des anderen der genannten Ausleger (12) positioniert ist.

6. Vorrichtung zum Berieseln (1) nach einem der vorangegangenen Ansprüche, **dadurch gekennzeichnet, dass** sie mindestens ein Gelenk (20) umfasst, das als Verbindung zwischen der genannten mindestens einer Drohne (10) und der genannten Berieselungsleiste (4) positioniert und darauf ausgelegt ist, eine relative Drehbewegung der genannten Drohne (10) im Verhältnis zu der genannten Berieselungsleiste (4) zu gestatten.

7. Vorrichtung zum Berieseln (1) nach einem beliebigen der vorangegangenen Ansprüche, **dadurch gekennzeichnet, dass** sie zwei Berieselungsleisten (4) umfasst, die, in ausgefahrener Position, ausgehend von den beiden gegenüberliegenden Seiten des genannten Tragrahmens aus verlaufen.

8. Vorrichtung zum Berieseln (1) nach einem der vorangegangenen Ansprüche, **dadurch gekennzeichnet, dass** die genannten Elemente zur Verteilung von Produkten (5) mindestens einen auf dem genannten Tragrahmen (2) montierten Tank (14) umfassen, der dazu bestimmt ist, mindestens ein zu verteilendes Produkt zu enthalten und an die genannte Vielzahl von Düsen (6) der genannten Berieselungsleiste (4) mittels mindestens einer Schlauchleitung (7) angeschlossen ist.

9. Vorrichtung zum Berieseln (1) nach einem beliebigen der vorangegangenen Ansprüche, **dadurch gekennzeichnet, dass** der genannte Tragrahmen (2) mindestens eine Halterung (21) umfasst, die geeignet ist, die genannte Drohne (10) bei genannter Berieselungsleiste (4) in eingefahrener Position abzustützen.

10. Vorrichtung zum Berieseln (1) nach einem beliebigen der vorangegangenen Ansprüche, **dadurch gekennzeichnet, dass** die genannte Drohne (10) ein elektronisches Steuergerät umfasst, das geeignet ist, die relative Position der genannten Drohne (10) im Verhältnis zu dem genannten Tragrahmen (2) zu steuern, um die genannte Drohne (10) in einem vorgegebenen Abstand zu halten und um die genannte Berieselungsleiste (4) während des Berieselns des Bodens mit den flüssigen Produkten in der ausgefahrenen Position im Verhältnis zu dem genannten Tragrahmen (2) in einem im Wesentlichen konstanten Abstand zu halten.

11. Vorrichtung zum Berieseln (1) nach Anspruch 10, **dadurch gekennzeichnet, dass** sie eine operativ an die elektronischen Steuergeräte der genannten Drohnen (10) angeschlossene Bedieneinheit umfasst, die darauf programmiert ist, die genannten Drohnen (10) anzusteuern, damit diese die Ausleger (12) der genannten Berieselungsleiste (4) zwischen der eingefahrenen Position und der ausgefahrenen Position bewegen.

## Revendications

1. Appareil d'aspersion (1) pour la distribution de produits agricoles, susceptible d'avancer sur le sol, comprenant :
- au moins un châssis de support (2) ;
- au moins une rampe d'aspersion (4) dotée d'une pluralité de buses (6) de distribution, associée de manière opérationnelle audit châssis de support (2) et mobile entre une position étendue, dans laquelle elle fait saillie latéralement audit châssis de support (2) et une position rétractée, dans laquelle elle est placée à proximité dudit châssis de support (2), ladite rampe d'aspersion (4) comprenant au moins deux bras (12) reliés entre eux ;
- moyens d'alimentation de produits (5) agricoles associés audit châssis de support (2) placés en liaison hydraulique avec ladite pluralité de buses (6) ;
- au moins deux drones (10) mécaniquement liés à ladite rampe d'aspersion (4) pour la soutenir en l'air, chaque drone (10) étant mécaniquement lié à un bras correspondant (12) de ladite rampe d'aspersion (4) ;
ledit appareil d'aspersion (1) étant **caractérisé en ce qu'**au moins deux bras (12) de ladite rampe d'aspersion (4) sont reliés au moyen d'un raccord (13) flexible ;
dans lequel les bras (12) de ladite au moins une rampe d'aspersion (4) et le raccord flexible (13) sont intérieurement creux, placés en liaison hydraulique avec lesdits moyens d'alimentation de produits (5) et avec ladite pluralité des buses (6), lesdits bras (12) étant susceptibles d'être traversés d'au moins une première portée de produit agricole pour alimenter ladite pluralité de buses (6).

2. Appareil d'aspersion (1) selon la revendication 1, **caractérisé en ce qu'**il comprend des moyens d'alimentation électrique (9) associés audit châssis de support (2) placés en liaison électromagnétique avec ledit drone (10) pour l'alimenter.

3. Appareil d'aspersion (1) selon la revendication 2, **caractérisé en ce que** lesdits moyens d'alimentation électrique (9) comprennent au moins une batterie (11) montée sur ledit châssis de support (2) en liaison électromagnétique avec ledit au moins un drone (10).

4. Appareil d'aspersion (1) selon la revendication 3, **caractérisé en ce que** lesdits moyens d'alimentation électrique (9) comprennent au moins un générateur (25) électriquement relié à ladite batterie (11) pour la charger électriquement.

5. Appareil d'aspersion (1) selon l'une quelconque des revendications précédentes, **caractérisé en ce que** chaque bras (12) de ladite rampe d'aspersion (4) s'étend entre une première extrémité et une seconde extrémité opposée dotées, respectivement, d'une première ouverture et d'une seconde ouverture ; ledit raccord flexible (13) étant placé en liaison fluidodynamique entre la seconde ouverture de la seconde extrémité d'un desdits bras (12) et la première ouverture de la première extrémité de l'autre desdits bras (12).

6. Appareil d'aspersion (1) selon une des revendications précédentes, **caractérisé en ce qu'**il comprend au moins une articulation (20) placée en liaison entre au moins un drone (10) et ladite rampe d'aspersion (4), prédisposé pour permettre un mouvement de rotation relatif dudit drone (10) par rapport à ladite rampe d'aspersion (4).

7. Appareil d'aspersion (1) selon l'une quelconque des revendications précédentes, **caractérisé en ce qu'**il comprend deux rampes d'aspersion (4) qui, en position étendue, s'étendent à partir de deux côtés opposés dudit châssis de support.

8. Appareil d'aspersion (1) selon une des revendications précédentes, **caractérisé en ce que** lesdits moyens d'alimentation de produits (5) comprennent au moins un réservoir (14) monté sur ledit châssis de support (2), destiné à contenir au moins un produit à distribuer et relié à ladite pluralité de buses (6) de ladite rampe d'aspersion (4) au moyen d'un conduit flexible (7).

9. Appareil d'aspersion (1) selon l'une quelconque des revendications précédentes, **caractérisé en ce que** ledit châssis de support (2) comprend au moins une base de soutien (21) apte à soutenir ledit drone (10) avec ladite rampe d'aspersion (4) en position rétractée.

10. Appareil d'aspersion (1) selon l'une quelconque des revendications précédentes, **caractérisé en ce que** ledit drone (10) comprend une unité de commande électronique susceptible de contrôler la position relative dudit drone (10) par rapport audit châssis de support (2) pour maintenir ledit drone (10) à une distance prédéfinie et pour maintenir ladite rampe d'aspersion (4) dans la position étendue à une distance sensiblement constante par rapport audit châssis de support (2) pendant l'aspersion des produits liquides sur le sol.

11. Appareil d'aspersion (1) selon la revendication 10, **caractérisé en ce qu'**il comprend une unité de commande reliée de manière opérationnelle à l'unité de commande électronique desdits drones (10) et programmée pour ordonner auxdits drones (10) de mettre en mouvement les bras (12) de ladite rampe d'aspersion (4) entre la position rétractée et la position étendue.
